# EUROPEAN PATENT APPLICATION

(11) **EP 1 249 690 A1**
(43) Date of publication of application: **16.10.2002**
(21) Application number: 01830280.2
(22) Date of filing: 30.04.2001
(51) Int. Cl.: G01J 5/10

(54) **Thermal detector**

(30) Priority: 13.04.2001 IT RM200194
(71) Applicant: Porzio, Francesco, 00167 Roma (IT)
(72) Inventor: Porzio, Francesco, 00167 Roma (IT)
(74) Representative: Leone, Mario

(57) **Abstract**

The invention described is a portable instrument useful to locate warm bodies such as humans and animals, also in low visibility conditions, or if light and colour conditions make them hard to locate by optical inspection. The device, detecting electromagnetic radiation in thermal infrared band emitted by warm bodies, helps the user to locate bodies with temperature higher than other objects in surrounding environment. When in use, the device is hand held and pointed toward a particular direction by the user and it indicates the mean temperature of environment in its field of vision, and if it detects a body warmer than other objects it activates a visual indicator, a buzzer and a vibration motor.

## Description

The device is an instrument able to locate in low visibility environment warm bodies, such as animals and humans. The device, whose dimensions are about 15 x 5 x 4 cm, analyses environment temperature by a directive detector which detects electromagnetic radiation in thermal infrared band emitted by warm bodies. The device detects bodies having surface temperature higher than temperature of other bodies in the surrounding environment, even if light and colour conditions make them hard to locate by visual inspection.

When in use, the device is pointed by the user toward a particular direction, and it measures mean temperature of the environment inspected in its field of vision. If the device detects a body warmer than surrounding environment it activates an optical indicator, a buzzer and a vibration motor.

The devices existing for the same purpose can only detect time change in infrared radiation, so they must be kept continuously in motion by the user in order to convert a spatial difference of temperature in a time variation of radiation detected. This kind of device has the following limitations:
- it is difficult to use, because the user has to move continuously and regularly the device,
- the sensitivity is not constant, because it depends on the speedy of the motion that the user gives to the device,
- it can't detect a motionless body if the device is motionless too or if it is moved too slowly by the user,
- spatial resolution is low, because as effect of the movement of the device, the user gets the warm target indication when the instrument is no longer pointed toward the warm target,
- because of the sensitivity to time variation of temperature, if the user scans twice an environment moving the instrument into opposite direction he gets two different indications when the instrument is pointing the same body,
- the instrument doesn't detect a warm body, but when it is moved by the user it detects spatial variation of temperature so that the users can detect the presence of a warm body and locate it.

The invention solves the problems previously described because it indicates the temperature of the observed environment, instead of detect only time change in temperature, and detects the presence of a warm body, notifying it to the user. This is possible thanks to numerical conversion of the electric signal produced by a pyroelectric detector sensible to the thermal infrared electromagnetic radiation, and using a microcontroller based decision system. The microcontroller detects the presence of a warm body analysing the signal produced by the detector and drives an indicator perceptible by the user.

In picture 1 is shown, viewed from upside, a section of the main components inside the device: the Fresnel lens (1) used to focus the thermal infrared electromagnetic radiation emitted by warm bodies (with wavelength between 8-14µm) on the sensible surface (2) of the pyroelectric detector (3), the printed circuit board (4) with assembled electronic components.

The pyroelectric detector generates an electrical signal when exposed to heat in the form of infrared radiation received within a view angle depending on detector size and lens focal length. For the application described the typical view angle is between 5 and 10 degrees, but it is possible to change it using a different lens or a different detector. The signal generated by the detector, which is proportional to mean temperature of the bodies in the field of vision, is converted by an analog to digital converter and is managed by a microcontroller. As shown in picture 2, where is represented the device viewed from the top, the microcontroller manages three keys (6), (7), (8) used to control the device, a graphical indicator (5) (a LED bar or a liquid crystal display - LCD), a buzzer and a vibration motor used to indicate to the user the presence of a warm body in the field of vision of the instrument.

The microcontroller processes the signal generated by the pyroelectric detector (converted in numerical format), whose amplitude is proportional to mean temperature of the environment included in the field of vision, with the following purposes:
- show to the user the temperature of the environment within the field of vision,
- implement the decision criterion described later, to detect and notify to the user the presence of a warm body in the field of vision.

At power-on (or on user request) the device calibrates itself, that's to say it computes the mean temperature of the environment included in the field of vision and takes this temperature as a reference temperature. After the devices is calibrated, the microcontroller lights up a different LED on the bar (or shows a corresponding indication on the LCD) whose position is proportional to the difference between the temperature of the environment included in the field of vision and the reference temperature. This indication shows to the user the mean temperature of the bodies in the field of vision of the device.

If the observed environment temperature raises up to get higher than reference temperature (plus a small quantity called threshold temperature), the microcontroller lights up all the LED in the bar and activates buzzer and vibration motor. Vibration motor and buzzer are deactivated when the observed environment temperature decreases and gets lower than reference temperature (plus the threshold temperature). The sensitivity of detection criterion, that is the sensitivity to detect a body warmer than other objects in surrounding environment, depends on the value of threshold temperature. User has to calibrate the device each time the mean temperature of the environment changes quickly (for example, if it gets exposed to direct sun light) to avoid that quick increasing environment temperature could cause false indication of a warm body.

To avoid that slow temperature variations (for example, during a day) could cause false detection, the device slowly modifies reference temperature to make it equal to the mean temperature of the environment in the field of vision, computed in a time period of about 30 seconds. If this period is reduced the instrument is less sensible to false alarms caused by slow variation of environment temperature, and less sensible to detect warm bodies.

The user can manage three keys (6), (7), (8), with the following purposes:
- power on/power off
- calibration
- sensitivity adjust
- activate/deactivate buzzer and vibration motor

To power on the device the user has to press the key (8), which is also used to calibrate. To power off the device the user has to keep the key (7) pressed for more than one second. To activate and deactivate buzzer and vibration motor the user has to press key (7) several times.

To change the sensitivity of the device the user has to press several times the key (6), which modifies the dynamic of LED (or LCD) graphic indicator and the sensitivity of detection criterion previously described.

Each time the user presses a key, the device indicates the status of battery charge, buzzer and vibration motor, by lighting up for one second one or more LED in the corresponding position near the graphic icons drawn on front panel.

The devices shows to the user the sensitivity level selected by lighting up more than one adjacent LED (instead of one) during operation. If three sensitivity levels are allowed, when user has selected minimum sensitivity level only one LED is lighted in bar, when sensitivity is at medium level two LED are lighted, and when sensitivity is at maximum level three LED are lighted (in any case, when a warm body is detected all the LED in bar are lighted).

It is also possible to use a dual pyroelectric detector, which contains two sensing elements on a horizontal plane (differential detection mode). This kind of detector produces an electric signal proportional to the difference between radiation detected by two elements, that is the difference between temperature of adjacent areas in the field of vision, one containing the target and the other used as a reference. In this operating mode it isn't necessary to calibrate the device when the environment temperature changes, because it measures the difference between the temperature of two adjacent areas, which are characterized by the same temperature until a warm body is present in one of them. This operating mode is useful when frequent time change in mean environment temperature make the user frequently calibrate the instrument using single pyroelectric detector.

It is possible to make a single device leaving the user free to select the single or differential detecting mode, using a dual pyroelectric detector and a shutter, moved by the user in two positions, which darkens one of the sensing elements of the pyroelectric detector. If the user moves the shutter to darken one sensing element the device works like using a single pyroelectric detector (absolute operating mode), and if the user moves the shutter to leave both sensing elements receive infrared radiation the device works like using dual pyroelectric detector (differential operating mode).

A different shape of the device, a different shape and position of keys and visual indicator (LED or LCD), a different logic to manage the keys described don't change the working principle of the device and don't bring innovation to it.

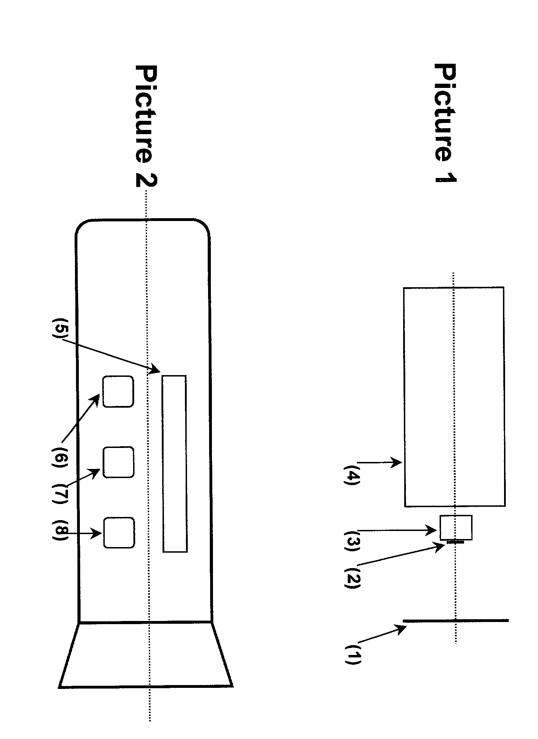

## Claims

1. Portable instrument which processes measures of temperature of objects in its field of vision got by a pyroelectric detector, in order to locate warm bodies (such as humans and animals) present in the environment;

2. device as claimed in Claim 1, using a single pyroelectric detector to measure temperature of environment included in its field of vision (single operating mode), or a dual (or multiple) element pyroelectric detector to measure the difference between temperature of two or more areas in its field of vision (differential operating mode);

3. device as claimed before, using a dual element (or multiple element) pyroelectric detector, and a shutter managed by the user to darken one or more sensing element of pyroelectric detector, in order to select single operating mode or more differential operating modes (according to how many sensing elements are darkened);

4. device as claimed before, using numerical conversion of electric signal produced by pyroelectric detector, and using digital signal processing by microcontroller in order to detect a warm body

5. device as claimed before, using a visual LED bar indicator (or liquid crystal display, or analog microamperometer) to indicate to the user the difference between temperature of observed environment (in single or differential operating mode) and reference temperature (or calibration temperature), and to indicate the detection of a warm body;

6. device as claimed before, able to locate the presence of a warm body in the observed environment by detecting a fast temperature increase measured in single or differential operating mode, up to detect a temperature higher than reference temperature (calibration temperature) plus a fixed value called threshold temperature;

7. device as claimed before, able to slowly modify reference temperature (calibration temperature) in order to make it equal to the mean temperature of the environment included in the field of vision, computed in a time period of about 30 seconds

8. device as claimed before, using a buzzer and a vibration motor to notify to the user the presence of a warm body in the field view of the device;

9. device as claimed before, using a LED bar (or liquid crystal display) to indicate the instrument status (sensitivity, battery charge, buzzer and vibration motor status);

10. device as claimed before, using a laser pointer to show to the user the centre of the field of vision of the device, by a spot light.
